# EUROPÄISCHE PATENTSCHRIFT

(11) **EP 4 194 168 B1**
(45) Veröffentlichungstag und Bekanntmachung des Hinweises auf die Patenterteilung: **04.12.2024**
(21) Anmeldenummer: 22211859.8
(22) Anmeldetag: 07.12.2022
(51) Int. Cl.: B28B 1/26, B28B 3/02, B28B 3/04, B28B 3/06, B28B 13/02, B28B 23/00, C04B 35/80

(54) **VERFAHREN UND VORRICHTUNG ZUR HERSTELLUNG KERAMISCHER FASERKOMPOSITE MIT VARIABLER GEOMETRIE**
METHOD AND APPARATUS FOR PRODUCING VARIABLE GEOMETRY CERAMIC FIBER COMPOSITES
PROCÉDÉ ET DISPOSITIF POUR LA FABRICATION DE COMPOSITES CÉRAMIQUES FIBREUX À GÉOMÉTRIE VARIABLE

(30) Priorität: 07.12.2021 DE 102021132136
(43) Veröffentlichungstag der Anmeldung: 14.06.2023
(73) Patentinhaber: Deutsches Zentrum für Luft- und Raumfahrt e.V., 53227 Bonn (DE)
(72) Erfinder: Welter, Michael, 51147 Köln (DE); Leisner, Vito, 51147 Köln (DE)
(74) Vertreter: dompatent von Kreisler Selting Werner - Partnerschaft von Patent- und Rechtsanwälten mbB

(56) Entgegenhaltungen:
- DE-A1- 102020 106 043
- DE-A1- 3 935 601
- US-A- 5 660 863
- US-A1- 2013 116 109
- US-A1- 2017 334 791
- US-A1- 2017 369 382

## Beschreibung

Die vorliegende Erfindung betrifft ein Verfahren sowie eine Vorrichtung zur Herstellung keramischer Faserkomposite mit variabler Geometrie mittels eines Vakuum-Druck-Infusionsverfahrens.

Keramische Faserverbundwerkstoffe (engl. "ceramic matrix composites" oder kurz "CMC") bestehen grundsätzlich aus zwei Hauptkomponenten: einer keramischen Faserkomponente und einer keramischen Matrix, die die Fasern umgibt und zusammenhält. Durch die entsprechende Kombination dieser beiden Hauptkomponenten kann ein schadenstolerantes Versagen der ansonsten typischerweise spröden Keramiken erreicht werden. Ein schadenstolerantes Versagen kann auf unterschiedliche Weisen erreicht werden und ist unter anderem abhängig von dem verwendeten Matrixsystem, den verwendeten Fasern und der Faser-Matrix Anbindung.

Oxidkeramische Faserverbundwerkstoffe (ox-CMC) sind typischerweise sogenannte "Weak Matrix Composites" (WMC) und sind gekennzeichnet durch eine schwache, poröse Matrix, die aus feinen keramischen Partikeln des Matrixmaterials aufgebaut ist. Die Matrix bildet in ihrer Funktion das schwache Interface, um ein vorteilhaftes Versagensverhalten zu erreichen, welches zu einem quasi-duktilen Werkstoffverhalten (ähnlich zu Metallen) führt.

Ox-CMCs werden zumeist auf Basis partikulärer, häufig wasserbasierter oder lösungsmittelbasierter Schlickersysteme mit definierten Feststoffgehalten hergestellt. Im Vergleich zu nicht-partikulären Polymersystemen erschwert die partikuläre Natur des Schlickers zum einen die vollständige und gleichmäßige Infiltration aller Faserbündel und Faserbündelzwischenräume. Zum anderen muss das im Schlicker enthaltene Wasser bzw. Lösungsmittel durch Trocknung abgeführt werden, um einen trockenen, ausformbaren Grünkörper (Vorformling) zu erhalten. Aus diesem Grund lassen sich die aus der Polymertechnik bekannten und etablierten Infusionsverfahren nicht ohne Weiteres auf die Herstellung von ox-CMCs übertragen.

Zur Herstellung von langfaserverstärkten keramischen Faserverbundwerkstoffen sind derzeit unterschiedliche Technologien bekannt: die Handinflitration-/Rakel-Verfahren und Hand-Laminierung (Lay-up), Prepreg-Technologien, Wickeltechnologie (z.B. WHIPOX) und Infusionsverfahren.

Als grundsätzlichen Nachteil von Lay-up, Prepreg und Wickelverfahren, wie in EP 3 768 405 A1 beschrieben, kann die mehr oder weniger große Notwendigkeit manueller Prozessschritte zur Herstellung des geformten und getrockneten Grünkörpers angesehen werden. Dadurch ergibt sich eine eingeschränkte Automatisierbarkeit, Wirtschaftlichkeit und Reproduzierbarkeit des Prozesses bzw. Qualität des Materials. Diese Nachteile sind am ausgeprägtesten bei Handinfiltrations- und Lay-up Verfahren, die fast ausschließlich über manuelle Prozesse hergestellt werden. Während die Infiltration von Faserhalbzeugen wie z.B. Geweben über entsprechende Methoden und Werkzeuge zumindest teilautomatisierbar und in Grenzen hochskalierbar ist, erfolgt die Herstellung geformter Formteile auch bei Prepreg-Verfahren meist nur über manuell Lay-up Techniken.

Das Wickelverfahren, wie in EP 1 734 024 B1 offenbart, zeigt einen vergleichsweise hohen Automatisierungsgrad, allerdings nur für die Herstellung einfacher, rotationssymmetrischer Komponenten. Die Herstellung von einfachen Plattengeometrien oder anderen komplexer geformten Bauteilen erfordert auch beim Wickelverfahren das Aufschneiden und manuelle Umformen des Wickelkörpers. Zudem lässt sich das Wickelverfahren nicht parallelisieren (mehrere Bauteile parallel herstellen) und ebenfalls nicht vergleichsweise wirtschaftlich zu höheren Stückzahlen skalieren.

Weitere Nachteile sind die Herstellungszeit und der erforderliche Arbeitsaufwand. Insbesondere manuelle Lay-up Verfahren sind, abhängig von der Komplexität des Bauteils, sehr zeit- und arbeitsintensiv. Zudem unterliegt die Güte des späteren Werkstücks den Fertigkeiten des Bearbeiters und ist somit anfällig für eine breitere Streuung der Güte. Aber auch der Wickelprozess ist relativ zeitintensiv, da die Struktur durch die Ablage einzelner Faserbündel auf dem Wickelkern erst Umdrehung für Umdrehung aufgebaut werden muss. Durch den hohen Zeit- und Arbeitsaufwand sind auch die herstellbaren Stückzahlen limitiert. Die Verfahren sind außerdem meist auf eine bestimmte Faserarchitekturen bzw. Faser-Vorformen beschränkt. So können über das Wickelverfahren nur einzelne endlos-Faserbündel verarbeitet werden. In Lay-up und Prepreg-Verfahren werden nahezu ausschließlich 2D-Fasergewebe verarbeitet. Eine Anwendung des jeweiligen Herstellverfahrens auch für andere Faserarchitekturen, z.B. Fasergeflechte oder 3D-Faserpreformen, ist nur bedingt bis gar nicht umsetzbar.

Ein Infusionsverfahren ohne festes Werkzeug mit einem Vakuumsack zur Herstellung von CMC ist auch bekannt. Nachteilig ist jedoch der aufwendige Aufbau (lange Prozesszeit) und die Ressourceneffizienz in Bezug auf Verbrauchsmaterialien (z.B. Vakuumfolie, Dichtband). Insbesondere für die Herstellung größerer Stückzahlen des gleichen Bauteils ist dieses Verfahren daher ebenfalls ineffizient. Weiterhin lassen sich Infiltrationsdruck (Vakuum-Unterdruck) und die daraus resultierende Komprimierung der Faserlagen durch den Vakuumsack nicht voneinander trennen. Dies kann zu Problemen führen, da auf der einen Seite ein niedriger Druck zwar eine bessere Infiltration mit einem Minimum an Lufteinschlüssen ermöglicht, gleichzeitig die vollständige Infiltration der Faserbündel durch die stärkere Komprimierung verhindert wird. Zudem kann der Faservolumengehalt (FVG) nicht beliebig eingestellt werden, wodurch sich die Breite der darstellbaren Materialeigenschaften verringert.

Insbesondere hinsichtlich der flexiblen Anwendbarkeit und der automatisierbaren, endkonturnahen Herstellung komplexer Bauteile besteht somit Bedarf an einem Verfahren, mit welchem CMC, insbesondere ox-CMC in beliebiger dreidimensionaler Geometrie hergestellt werden können. Die vorliegende Erfindung stellt sich somit die Aufgabe, die aus dem Stand der Technik bekannten Nachteile zu vermeiden und ein Verfahren bereitzustellen, mit welchem CMC und insbesondere ox-CMC in beliebiger dreidimensionaler Geometrie hergestellt werden können.

DE 10 2020 106043 A1 offenbart ein Werkzeug zur Herstellung von Bauteilen aus keramischen Faserverbundwerkstoffen nach dem Oberbegriff des Anspruchs 1.

Überraschenderweise hat sich gezeigt, dass die der vorliegenden Erfindung zu Grunde liegende Aufgabe durch ein Vakuum-Druck-Infusions- und Trocknungsverfahren gelöst wird. In einer ersten Ausführungsform betrifft die vorliegende Erfindung somit ein Werkzeug zur Herstellung von Bauteilen aus keramischen Faserverbundwerkstoffen durch Infusion von Fasern mit einem Schlicker in einem Hohlraum, wobei der Schlicker Wasser und/oder Lösungsmittel sowie Partikel oder Präkursoren hierfür enthält,
wobei das Werkzeug eine Matrize umfasst, wodurch sich im Inneren des Werkzeugs ein Hohlraum befindet, der von der Matrize, der Oberseite und der Unterseite des Werkzeugs begrenzt wird,
dadurch gekennzeichnet, dass
das Werkzeug zumindest eine Einrichtung zur Erhöhung des Drucks im Inneren des Hohlraumes und/oder zur Zufuhr des Schlickers in den Hohlraum aufweist,
im Inneren der Matrize zumindest eine Vorrichtung zur Rückhaltung der Partikel oder der Präkursoren des Schlickers im Inneren des Hohlraumes und zur Abführung des enthaltenen Wassers und/oder des Lösungsmittels vorhanden ist, und
die Matrize zumindest eine Einrichtung aufweist, über welche der Druck im Inneren des Hohlraumes erniedrigt werden und/oder überschüssiges Wasser und/oder Lösungsmittel entfernt werden können,
wobei die zumindest eine Vorrichtung zur Rückhaltung der Partikel oder Präkursoren des Schlickers im Inneren des Hohlraumes und zur Abführung des enthaltenen Wassers und/oder des Lösungsmittels derart in der Matrize oder der Oberseite oder der Unterseite des Werkzeugs angeordnet ist, dass Wasser und/oder Lösungsmittel aus dem Hohlraum entfernt werden kann, ,
wobei die Matrize aus einem festen Material ausgebildet ist, welches sich bei der Anwendung nicht verformt, und
wobei das Werkzeug vorzugsweise weiterhin zumindest eine Heizvorrichtung aufweist, welche die Erwärmung des Hohlraums ermöglicht.

Das erfindungsgemäße Werkzeug weist somit eine Oberseite und eine Unterseite auf. Die seitliche Begrenzung erfolgt durch die Matrize. Das Werkzeug enthält weiterhin einen Stempel, wobei der Stempel formschlüssig an der Innenwand der Matrize anliegt und im Inneren der Matrize vertikal in seiner Position verschiebbar ist, wodurch sich ein Hohlraum zwischen Stempel und Matrize ausbildet. Der Stempel stellt somit die Oberseite des Werkzeugs dar. Weiterhin bevorzugt weist das Werkzeug eine Kavität auf, die in Raumrichtung unterhalb der zumindest einen Vorrichtung angeordnet ist. In der Kavität kann Wasser/Lösungsmittel des Schlickers gesammelt und über die zumindest eine Einrichtung aus der Kavität entfernt werden.

Erfindungsgemäß umfasst der Schlicker keramische und/oder silikatische Partikel sowie Wasser und/oder Lösungsmittel. Weiterhin ist es erfindungsgemäß möglich, dass der Schlicker nicht die Partikel an sich umfasst, sondern Präkursoren hierfür. Hierbei handelt es sich um Vorstufen der Partikel, wobei sich im Verfahren der Herstellung des Werkstoffs die Partikel dann ausbilden. Werden nachfolgend Partikel des Schlickers beschrieben, sind hierunter auch immer die zugehörigen Präkursoren zu verstehen. Geeignete keramische Partikel sind beispielsweise oxidkeramische Partikel oder nitridkeramische Partikel. Geeignete Präkursoren sind im Stand der Technik hinlänglich beschrieben und dem Fachmann bekannt.

Wasser und/oder Lösungsmittel des Schlickers werden nachfolgend auch als Fluid bezeichnet. Dies umfasst Wasser und/oder Lösungsmittel in flüssigem oder gasförmigem Aggregatzustand. Ebenso können Wasser und/oder Lösungsmittel sowohl als Flüssigkeit wie auch gasförmig vorliegen. Insbesondere werden sie gasförmig aus dem Werkzeug entfernt, da sich durch das Anlegen eines Unterdrucks der Aggregatzustand des Fluids ändern kann. Geeignete Lösungsmittel sind beispielsweise Glycerin oder andere Alkohole. Diese können alleine oder in Kombination mit Wasser eingesetzt werden. Besonders bevorzugt ist Glycerin alleine oder in Kombination mit Wasser.

Die Fasern können in Form von Geweben, Gelegen, Geflechten oder ähnlichen aus Lang- oder Endlosfasern hergestellten Faser-Vorformen sowie aus verschiedensten Kurzfaser-Vorformen wie z.B. Fleece (Vliese), Filze, Papiere oder ähnliches, jeweils 1D-, 2D- oder auch 3-dimensionalen (3D-) Fasergebilden vorliegen. Bei den Fasern handelt es sich erfindungsgemäß um keramische, silikatische, mineralische und/oder Glasfasern. Weiterhin können auch Basaltfasern oder pyrolysierte natürliche Fasern eingesetzt werden.

In einer weiteren Ausführungsform wird die der vorliegenden Erfindung zu Grunde liegende Aufgabe gelöst durch ein Verfahren zur Herstellung von Bauteilen aus keramischen Faserverbundwerkstoffen durch Infusion von Fasern mit einem Wasser und/oder Lösungsmittel enthaltenden Schlicker,
dadurch gekennzeichnet, dass man
(a) die Fasern in den Hohlraum eines zuvor beschriebenen Werkzeugs einbringt,
(b) das Werkzeug schließt,
(c) den Druck im Inneren des Werkzeugs gegenüber dem Umgebungsdruck absenkt,
(d) gegebenenfalls die Fasern im Inneren des Werkzeugs thermisch behandelt,
(e) einen ersten Wasser und/oder Lösungsmittel enthaltende Schlicker in den Hohlraum einbringt, wobei der Schlicker einen gegenüber Umgebungsdruck erhöhten Druck aufweisen kann,
(f) den Druck im Inneren des Werkzeugs absenkt und gegebenenfalls das Werkzeug thermisch aufheizt und Wasser und/oder Lösungsmittel aus dem Hohlraum entfernt,
(g) gegebenenfalls die Schritte (e) und (f) einmal oder mehrmals wiederholt, wobei ein Schlicker verwendet wird, der der gleiche oder ein anderer Schlicker ist wie der erste Schlicker, und
(h) anschließende den erhaltenen Grünkörper aus dem Werkzeug ausformt und in einem Ofen sintert.

Im Ergebnis erhält man ein Werkstück aus einem keramischen Faserkomposit, wobei das Werkstück bzw. der Grünling die Form des Werkzeugs aufweisen. Nachfolgend sind die beiden Ausführungsformen sowie bevorzugte Ausführungsformen weiter beschrieben. Dabei können Merkmale, welche für eine Ausführungsform offenbart sind, auch in anderen Ausführungsformen angewandt werden. Alle Merkmale können in beliebiger Weise miteinander kombiniert werden.

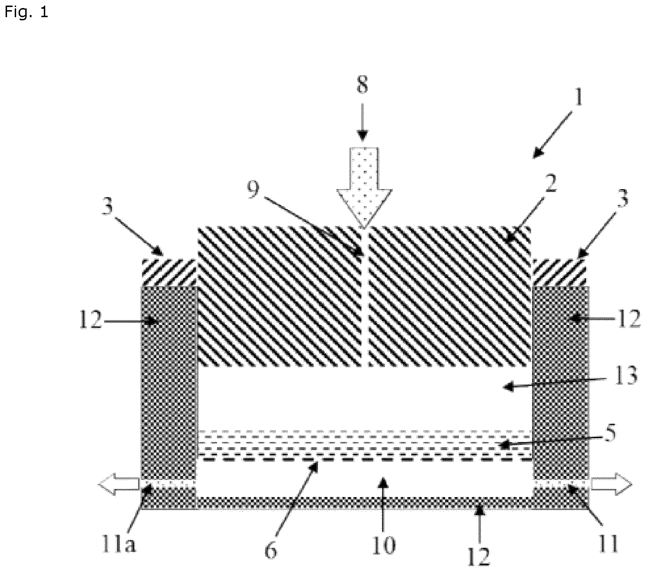

In Fig. 1 ist eine Ausführungsform einer nicht beanspruchten Vorrichtung gezeigt. Es zeigen:

| Bezugszeichen | |
|---|---|
| 1 | Werkzeug |
| 2 | Stempel (oberer Teil des Werkzeugs) |
| 3 | Aufgesetzter Rahmen zur Abdichtung des Werkzeugs |
| 5 | Poröse Membran (fest) zur selektiven Filtration von Fluid und Feststoff im Schlicker |
| 6 | Perforierter Einsatz zur mechanischen Stütze von 5 |
| 8 | Druck-Anschluss und Reservoir für Schlicker für Infusion |
| 9 | Infusionskanal |
| 10 | Kavität |
| 11 (a) | Einrichtungen für Abtransport Wasser/Lösungsmittel und Druckreduktion |
| 12 | Matrize (unterer Teil des Werkzeugs) |
| 13 | Hohlraum (Matrix) |

In das Innere des Hohlraums (13) werden erfindungsgemäß zunächst die Fasern (4) eingelegt. Die Fasern (4) können in Form von Geweben, Gelegen, Geflechten oder ähnlichen aus Lang- oder Endlosfasern hergestellten Faser-Vorformen sowie aus verschiedensten Kurzfaser-Vorformen wie z.B. Fleece, Filze, Papiere oder ähnliches, jeweils 1D, 2D oder auch 3-dimensionalen Fasergebilden vorliegen. Bei den Fasern handelt es sich erfindungsgemäß um keramische, silikatische, mineralische und/oder Glasfasern. Erfindungsgemäß sind somit Mischungen verschiedener Arten von Fasern mit umfasst, wodurch die Materialeigenschaften der Faserkomposite nach Wunsch eingestellt werden können. Unterschiedliche Fasern können an unterschiedlichen Positionen im Werkzeug und damit im Produkt eingearbeitet werden oder es können Mischungen beliebig im Inneren des Werkzeugs verteilt sein. Bevorzugt wird nur eine Art von Faser (4) verwendet. Insbesondere ist die Faser (4) eine keramische Faser (4).

Der Hohlraum (13) gibt die Form des späteren Grünlings vor. Die Fasern sollen der Geometrie des Hohlraums folgen, so dass im späteren Grünling die Fasern (4) an allen Positionen in der gewünschten Konzentration und Orientierung vorhanden sind.

Die Fasern (4) liegen beispielsweise in Form eines Textils vor, welches oberhalb der zumindest einen Vorrichtung (5, 6) zur Rückhaltung der Partikel/Präkursoren des Schlickers (7) im Inneren des Hohlraumes (13) und zur Abführung des enthaltenen Wassers und/oder des Lösungsmittels in den Hohlraum (13) eingebracht wird. Bei der Vorrichtung kann es sich zum Beispiel um eine poröse Membran handeln. Weiterhin kann es feste Strukturen zur Unterstützung der Membran geben.

Nach dem Einlegen der Fasern (4) in den Hohlraum wird der Druck im Inneren des Hohlraums (13) abgesenkt. Hierfür wird in einer bevorzugten Ausführungsform zunächst der Stempel (2) nach unten in Richtung der Matrize (12) bewegt. Der eingestellte Spalt stellt dabei die spätere Grünling-Dicke her. Über den Spalt und das Textilvolumen kann der Faserverbundgrünling exakt eingestellt werden.

Soweit in der vorliegenden Anmeldung die Begriffe "oben", "unten", "oberhalb" oder "unterhalb" verwendet werden, so sind diese so zu verstehen, dass das Werkzeug (1) wie in der Fig. 1 gezeigt verwendet wird und oben und unten einer solchen Orientierung im Raum entsprechen.

Sind Stempel (2) und Matrize (12) in einer solchen Position zueinander angeordnet, dass der Hohlraum (13) die Form des späteren Grünlings aufweist, wird im Inneren des Werkzeugs (1) über die zumindest eine Einrichtung (11, 11a) der Druck abgesenkt. Dies kann dadurch erfolgen, dass an die zumindest eine Einrichtung (11, 11a) eine Vakuumpumpe angeschlossen wird.

Die Absenkung des Druckes dient insbesondere dafür, den Schlicker gleichmäßig im Inneren des Hohlraums zu verteilen. Weist das Werkzeug keinen Stempel (2) auf, erfolgt die Absenkung des Druckes wie zuvor beschrieben. Die Form des Hohlraumes wird dann durch Matrize (12) und Vorrichtung (5, 6) vorgegeben.

Der Druck wird dabei auf einen Druck unterhalb Umgebungsdruck abgesenkt. Dies verkleinert ggf. vorhanden Luftblasen. Bevorzugt wird der Druck auf 800 mbar oder weniger, vorzugsweise auf 500 mbar oder weniger, insbesondere auf 250 mbar oder weniger, besonders bevorzugt 100 mbar oder weniger, insbesondere bevorzugt 80 mbar bis 10 mbar, bevorzugt von 60 mbar bis 20 mbar reduziert.

Sind die Fasern beispielsweise mit einer Schlichte versehen, so kann erfindungsgemäß bevorzugt das Werkzeug (1) durch eine vorhandene Heizvorrichtung aufgeheizt werden. Es können hierdurch erfindungsgemäß Temperaturen von bis zu 700 °C, vorzugsweise von 200 °C bis 600 °C im Inneren des Hohlraums (13) erreicht werden. Hierdurch wird die Schlichte entfernt und als gasförmiges Produkt durch die Einrichtung (11, 11a) und/oder über einen Anschluss (8) und einen Infusionskanal (9) entfernt.

Zwischen der zumindest einen Einrichtung (11, 11a) und der Vakuumpumpe können erfindungsgemäß ein oder mehrere Vorrichtungen vorgesehen sein, in welchen Stoffe und/oder Verbindungen, welche aus dem Inneren des Werkzeugs entfernt werden, wie z.B. abgebrannte Schlichte, aufgefangen werden, so dass diese nicht zur Vakuumpumpe gelangen.

Anschließend erfolgt die Infusion des Schlickers (7) in den Hohlraum (13) des Werkzeugs (1). Die Infusion erfolgt nicht alleine dadurch, dass im Inneren des Hohlraumes ein gegenüber der Umgebung verringerter Druck anliegt. Zusätzlich wird der Schlicker (7) selbst mit einem erhöhten Druck in das Innere des Hohlraums (13) eingebracht. Durch diese Kombination aus Druck und Vakuum wird ein CMC (keramischer Faserverbundwerkstoff) erhalten, in welchem der Schlicker (7) die Fasern und Zwischenräume zwischen den Fasern (4) oder Faserbündelzwischenräume besonders gut durchdringt. Die Zugabe des Schlickers in den Hohlraum (13) erfolgt durch einen Anschluss (8) sowie einen Infusionskanal (9). Diese können unmittelbar durch die Matrize (2) in den Hohlraum (13) geführt werden. Es ist erfindungsgemäß auch möglich, dass der Infusionskanal (9) durch den Stempel (2), soweit vorhanden, geführt wird. Die genaue Position ist dabei abhängig von der Form des Werkzeugs (1). Wichtig ist lediglich, dass eine Infiltration des Gewebes mit dem Schlicker ermöglicht wird, der Schlicker also in den Hohlraum (13) eingebracht wird.

Hierdurch werden -CMC erhalten, welche eine gegenüber bisherigen Herstellverfahren verbesserte Festigkeit aufweisen. Zudem kann bei gleicher Festigkeit der Faser-Volumen-Gehalt verringert werden, wodurch kostengünstige Produkte hergestellt werden können, ohne dass die Materialeigenschaften verschlechtert sind.

Zudem weisen CMC, die nach dem erfindungsgemäßen Verfahren und/oder mit einem erfindungsgemäßen Werkzeug (1) hergestellt wurden, eine homogenere Porosität und weniger Fehlstellen in der Struktur auf, als nach bekannten Verfahren herstellte CMC.

Der Schlicker (7) wird somit erfindungsgemäß mit einem gegenüber dem Umgebungsdruck erhöhten Druck in den Hohlraum (13) eingebracht. Der Druck entsteht nicht dadurch, dass auf den Stempel (2) Druck ausgeübt wird. Der Schlicker (7) selbst wird mit Überdruck in das Werkzeug (1) eingebracht. Dieser Überdruck beträgt vorzugsweise 100 bar oder weniger, insbesondere liegt er im Bereich von 1 bar bis 50 bar, bevorzugt von 2 bar bis 30 bar, besonders bevorzugt von 3 bar bis 20 bar. Der Druck ist von der genauen Ausgestaltung des Werkzeugs abhängig, also von der Größe, Geometrie sowohl den Materialien der Komponenten.

Nach der erfindungsgemäßen Druck-Vakuum-Infusion (DVI) des Schlickers (7) in den Hohlraum (13) kann eine weitere Verdichtung erfolgen. Diese kann in einer bevorzugten Ausführungsform durch das Einfahren des Stempels (2) in Richtung der Matrize (12) erfolgen. Es kann auch die Matrize (12) in Richtung des Stempels (2) bewegt werden. Zusätzlicher Druck kann durch den Druck-Anschluss (8) auf das Innere des Hohlraums (13) ausgeübt werden.

Erfindungsgemäß ist es möglich, dass anschließend eine weitere Druck-Vakuum-Infusion eines Schlickers (7) in das Innere des Werkzeugs (1) erfolgt. Dabei kann der nun infiltrierte Schlicker (7) der gleiche oder ein anderer sein, wie der im ersten Durchgang eingesetzte Schlicker (7). Die verwendeten Schlicker (7) können sich beispielsweise durch den Anteil an keramischen Partikeln oder die Größe der enthaltenen Partikel oder die Partikelgrößenverteilung unterscheiden. Die Schlicker (7) können sich auch in ihrer chemischen Zusammensetzung unterscheiden. Insbesondere können sich die Partikel im Schlicker (7) in ihrer chemischen Zusammensetzung unterscheiden. Ebenso kann der Anteil an Partikeln im Schlicker (7) jeweils verschieden sein. Die Druck-Vakuum-Infusion kann erfindungsgemäß auch mehrfach wiederholt werden, bis die gewünschten Eigenschaften erreicht werden. Bevorzugt ist es jedoch, wenn die DVI des zumindest einen Schlickers (7) einmal oder zweimal erfolgt.

Anschließend wird das Werkstück im Inneren des Hohlraums (13) getrocknet. Vorzugsweise erfolgt auch die Trocknung bei einem gegenüber Umgebungsdruck verringerten Druck. Vorzugsweise wird ein Vakuum mit einem Druck von 100 mbar oder weniger, insbesondere von 50 mbar oder weniger, bevorzugt von 20 mbar oder weniger, besonders bevorzugt von 10 mbar oder weniger angelegt.

Im Schlicker enthaltenes Wasser und/oder Lösungsmittel wird beim erfindungsgemäßen Verfahren bzw. in der erfindungsgemäßen Vorrichtung von den im Schlicker ebenfalls enthaltenen Partikeln abgetrennt. Hierfür ist im Inneren des Werkzeugs zumindest eine Vorrichtung (5, 6) zur Rückhaltung der Partikel des Schlickers (7) im Inneren des Hohlraumes (13) vorhanden. Überschüssiges Wasser und/oder Lösungsmittel werden zum Beispiel in der Kavität (10) gesammelt. Wird ein Unterdruck angelegt, verdampfen diese und können über die zumindest eine Einrichtung (11, 11a) entweder aus der Kavität (10 ) oder direkt aus dem Hohlraum (13) entfernt werden.

Die Trocknung wird erfindungsgemäß bevorzugt über eine Erwärmung unterstützt. Hierzu wird das Werkstück im Inneren des Werkzeugs auf eine Temperatur im Bereich von 30 °C bis 400 °C, vorzugsweise von 60 °C bis 200 °C erwärmt.

Anschließend wird das Werkzeug (1) geöffnet und das getrocknete Werkstück (Grünling) kann entformt werden. Anschließend erfolgt in allgemein bekannter Weise eine Sinterung in einem Ofen.

Durch die bereits im Werkzeug (1) durchgeführt Trocknung ist der Grünling formstabil und kann einfach aus dem Werkzeug entnommen werden, ohne dass es zu Verformungen kommt. Dies ist insbesondere bei komplexen Geometrien des Grünlings relevant. Die somit erreichte Formtreue und Oberflächengüte übertreffen die aller bekannten Herstellungsverfahren. Aus wirtschaftlichen wie ökologischen Gesichtspunkten ist dies sehr vorteilhaft, da der kosten- und energieintensive Prozess der (mechanischen) Nachbearbeitung ganz oder teilweise entfallen kann.

Erfindungsgemäß kann der Stempel (2) beispielsweise aus einer Keramik, Gips oder einem anderen mineralischen Material und/oder Stahl bestehen. Insbesondere ist der Stempel (2) derart ausgestaltet, dass er eine geringe Wärmeausdehnung aufweist, so dass die Form während des gesamten Verfahrens gleichbleibt. Insgesamt ist das Material des Stempels (2) so gewählt, dass es eine hohe Abrasionsbeständigkeit gegenüber den Materialien des Schlickers (7) aufweist. Die Verformbarkeit sollte gering sein, um Grünzeuge zu erhalten, deren Form denen des Werkzeugs (1) entspricht.

Erfindungsgemäß kann der Stempel (2) an der Unterseite, also der Seite, welche mit dem Schlicker (7) und den Fasern (4) in Kontakt kommt, eine Beschichtung aufweisen, welche eine gute Trennbarkeit ermöglicht. Hierdurch kann der Grünling nach erfolgter Herstellung einfach aus dem Werkzeug entnommen werden.

Auch für die Matrize (12) werden erfindungsgemäß Materialien gewählt, welche eine geringe Wärmeausdehnung, hohe Abrasionsbeständigkeit gegenüber Schlicker und Fasern sowie eine geringe Verformbarkeit auch bei Temperaturen bis zu 600 °C aufweisen.

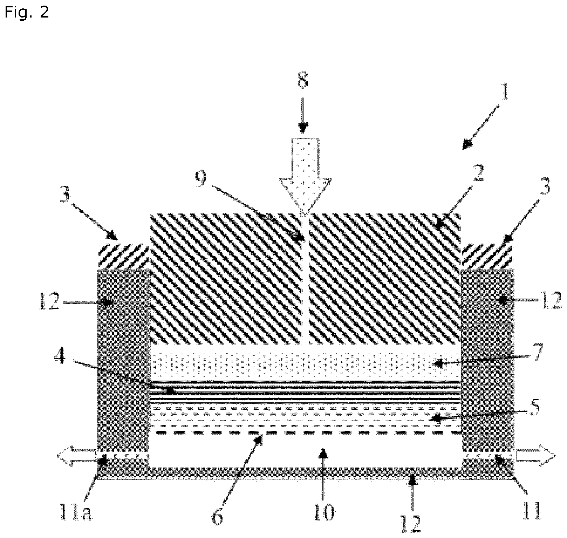

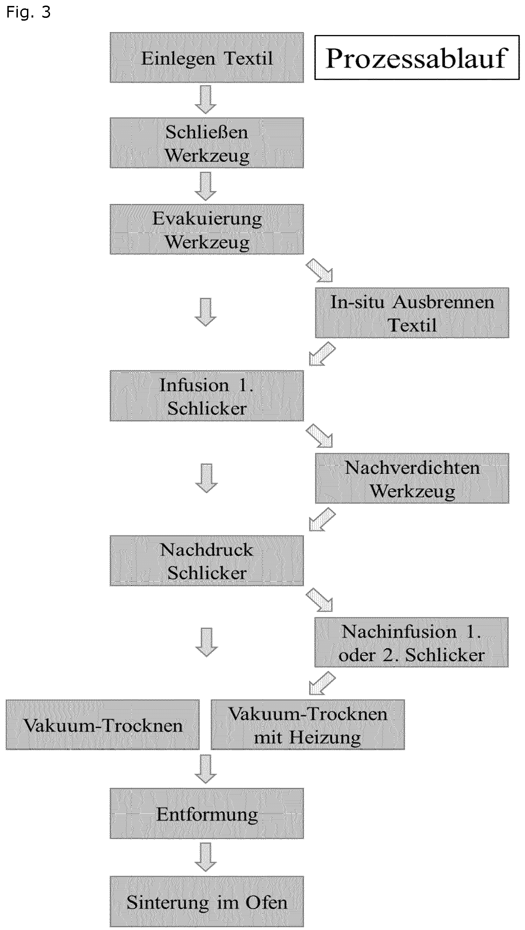

In Fig. 2 ist ein geschlossenes Werkzeug mit Fasern (4) und Schlicker (7) gezeigt. Fig. 3 zeigt schematisch ein erfindungsgemäßes Verfahren wie zuvor beschrieben. In diesen und den nachfolgenden Figuren sind jeweils Werkzeuge (1) gezeigt, welche einen Stempel (2) aufweisen.

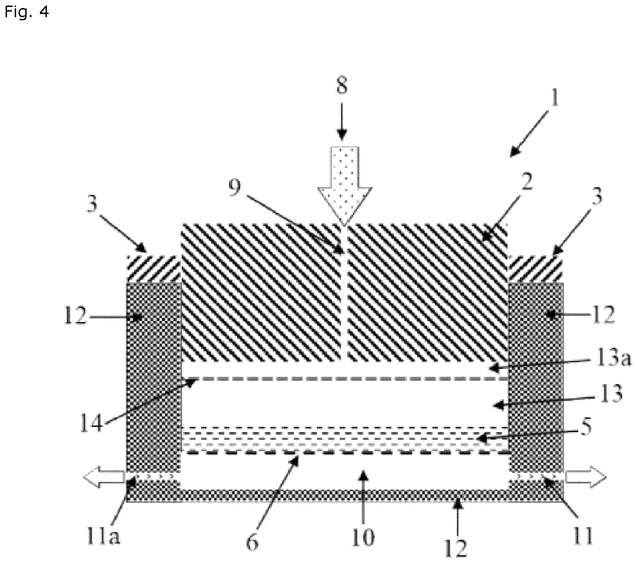

Erfindungsgemäß weist das Werkzeug an der Unterseite des Stempels (2) ein Element (14) auf, wodurch eine weitere Kavität (13a) zwischen der Unterseite des Stempels und der Vorrichtung (14) entsteht, so dass Schlicker (7) durch den Infusionskanal (9) in die Kavität (13a) fließt und von dort homogen in dem Hohlraum (13) verteilt wird, wobei das Element (14) perforiert ist, so dass Schlicker (7) aus der weiteren Kavität (13a) in den Hohlraum (13) fließen kann. Eine solche erfindungsgemäße Ausführungsform ist in Fig. 4 gezeigt.

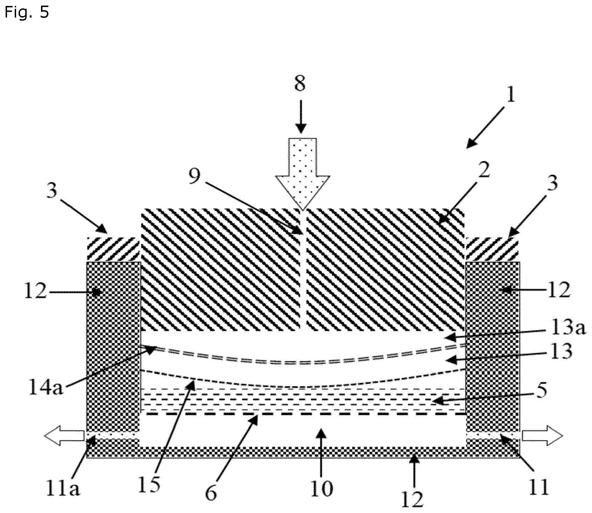

In einer weiteren bevorzugten Ausführungsform können im Inneren des Hohlraums (13) Elemente (16, 16a) vorhanden sein, die die Geometrie des Hohlraums (13) definieren. Eine Möglichkeit der Ausgestaltung der Elemente (16, 16a) ist in Fig. 5 gezeigt. Das Vorhandensein der Elemente ermöglicht es 2D- oder 3D-Strukturen aus CMC herzustellen. Die Elemente ermöglichen es, auch 3D-Strukturen mit komplexen Geometrien in hoher Reproduzierbarkeit der Eigenschaften herzustellen.

Erfindungsgemäß kann die Einrichtung (8, 8a) zur Erhöhung des Drucks im Inneren des Hohlraumes (13) und/oder zur Zufuhr des Schlickers (7) in den Hohlraum (13) an der Oberseite des Stempels (2) angeordnet ist und über einen Infusionskanal (9) im Stempel (2) mit dem Hohlraum (13) verbunden ist. Eine solche Anordnung ist in Fig. 1 gezeigt.

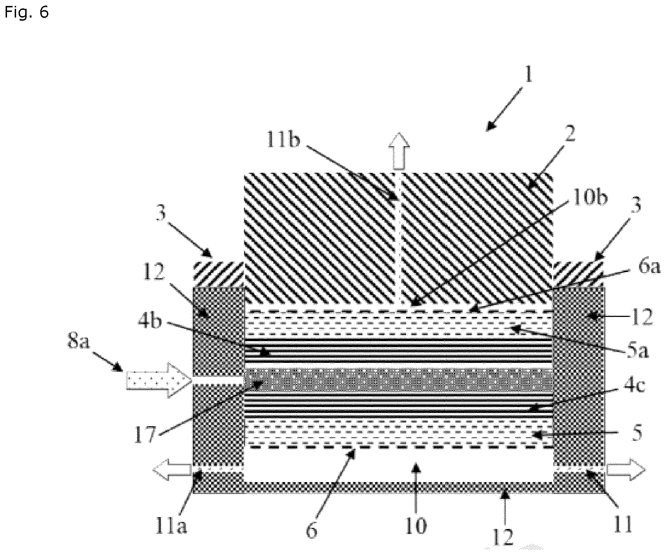

Es ist erfindungsgemäß jedoch auch möglich, dass Einrichtung (8, 8a) zur Erhöhung des Drucks im Inneren des Hohlraumes (13) und/oder zur Zufuhr des Schlickers (7) in den Hohlraum (13) im Bereich der Matrize (12) vorhanden ist und sich oberhalb der zumindest einen Vorrichtung (5, 6) zur Rückhaltung der Partikel des Schlickers (7) im Inneren des Hohlraumes (13) und zur Abführung des enthaltenen Wassers und/oder des Lösungsmittels befindet. Eine solche Ausführungsform ist in Fig. 6 dargestellt. Die Betriebsrichtung des Werkzeugs wird hierbei umgekehrt, sodass nicht nur über die Einrichtungen (11, 11a) Fluid entfernt wird, sondern ebenfalls der vormalige Infusionskanal (9) als Austritt für ein Fluid (11b) genutzt werden kann. Die Infusion des Schlickers (7) in den Hohlraum (13) findet dann über ein hohles, perforiertes Element (17) statt, welches im Inneren des Hohlraums (13) angeordnet ist. Bevorzugt ist das Element (17) derart angeordnet, dass es den Hohlraum (13) in zwei voneinander getrennte Bereiche trennt. In diese kann dann über das Element (17) Schlicker (7) eingebracht und in gleicher Weise Druck aufgebracht werden.

Oberhalb (4b) und unterhalb (4c) des perforierten Elements (17) werden Textile (Fasern (4)) eingelegt, die nach Infusion mit Schlicker (7) und Trocknung zwei separate Werkstücke ergeben. Oberhalb des oberen Textils (4b) kann ein weiterer poröser Filter (5a) eingesetzt, um das Fluid und die partikulären Anteile des Schlickers (7) beim Trockenvorgang zu trennen. Das Fluid dieses Teils wird über eine Einrichtung entnommen, welche oberhalb des Elements (17) angeordnet ist. Vorzugsweise kann diese Einrichtung (11b) dem Infusionskanale (9) einer anderen Ausgestaltung entsprechen. Zwischen oberem Filter (5a) und Stempel (2) kann in einer bevorzugten Ausgestaltung ein weiteres perforiertes Element (6a) in den Hohlraum (13) eingebracht werden, so dass eine neue Kavität (10b) oberhalb des perforierten Elements (6a) und unterhalb des Stempels (2) für den flächigen Abtransport des Fluids entsteht.

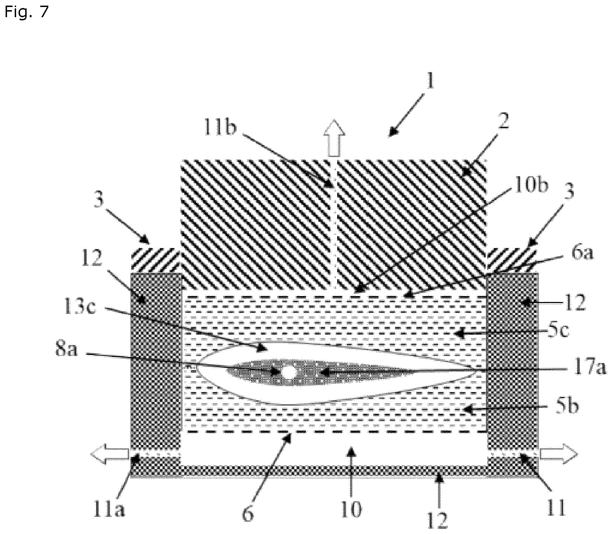

Alternativ ist die Einrichtung (8, 8a) zur Erhöhung des Drucks im Inneren des Hohlraumes (13) und/oder zur Zufuhr des Schlickers in den Hohlraum (13) im Inneren des Hohlraums (13) angeordnet ist, wobei die Einrichtung (8, 8a) von einem Element (17a) umgeben ist, über welche der Schlicker (7) in den Hohlraum (13) eingebracht wird. Fig. 7 zeigt schematisch eine solche Ausführungsform. Die Infusion findet in dieser Ausführungsform über ein hohles, perforiertes Element (17a) statt, welches im Inneren des Hohlraums (13) angeordnet ist, diesen jedoch nicht in zwei voneinander getrennt Bereiche trennt. Oberhalb und unterhalb des perforierten Elements (17a) können ebenfalls im Inneren des Hohlraums (13) zwischen Stempel (2) und perforiertem Element (17a) bzw. zwischen Matrize (12) und perforiertem Element (17a) zwei separate, poröse Membranen (5b/c) mit der Außenkontur des späteren Werkstücks in die Matrix eingebaut werden. Somit entsteht eine neue Kavität (13c) zwischen dem perforierten Element (17a) und den Membranen (5b/c). Die Membranen (5b/c) sind analog den Vorrichtungen (5/6) ausgestaltet und ermöglichen die Filtration von Fluid und Feststoff (Partikel) im Schlicker (7). Sie ermöglichen hierdurch die Herstellung auch komplexer Geometrien.

In diese neue Kavität (13c) wird die Faser (4d) um das poröse Element (17a) drapiert und über den Anschluss (8a) mit Schlicker (7) versorgt, über den auch in gleicher Weise Druck aufgebracht werden kann. Hiernach läuft der Prozess in gleicher Weise weiter (Infusion, Trocknung, Entformung). Das hohle, poröse Element (17a) kann dabei als Ganzes entnommen und wiederverwendet werden oder als verlorene Form aus dem Grünkörper des CMCs beispielsweise chemisch oder thermisch entfernt werden.

Das erfindungsgemäße Werkzeug (1) kann alleine oder in einer Anordnung mehrerer Werkzeuge (1) vorliegen. Eine solche Anordnung kann zwei, drei oder mehr Werkzeuge (1) umfassen. Diese können jeweils gleich ausgestaltet sein, so dass das gleiche Werkstück gleichzeitigt in mehrfacher Ausfertigung hergestellt werden kann. Die Anordnung kann auch mehrere unterschiedliche Ausgestaltungen des Werkzeugs (1) aufweisen, so dass unterschiedliche Werkstücke gleichzeitig hergestellt werden können.

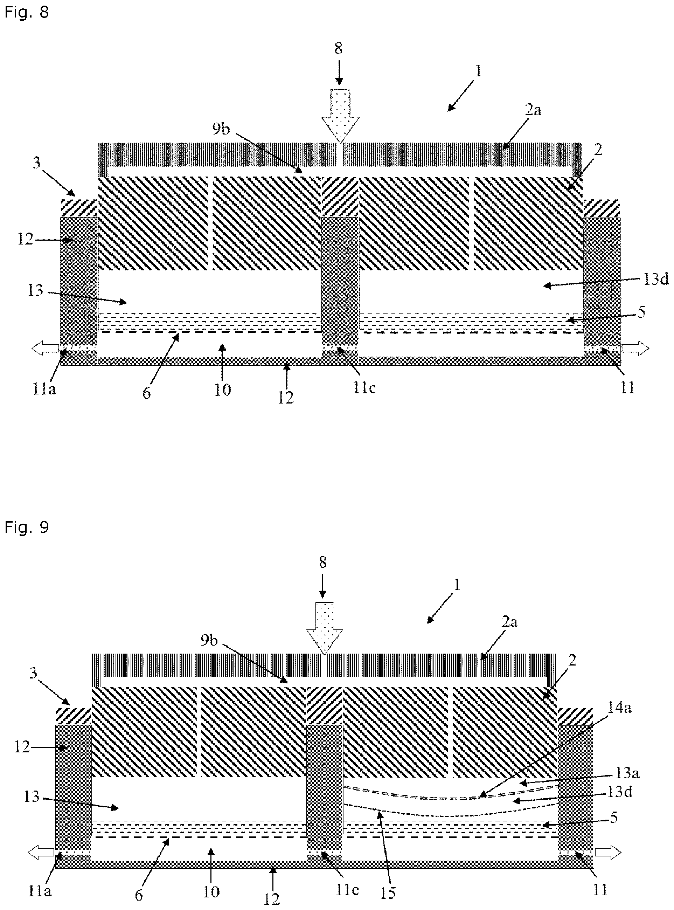

Eine Anordnung ist beispielhaft in Fig. 8 und Fig. 9 gezeigt. In Fig. 8 sind gleichartige nicht beanspruchten Werkzeuge (1) miteinander kombiniert, wohingegen in Fig. 9 eine Ausführungsform mit unterschiedlichen Werkzeugen (1) gezeigt ist.

Das Werkzeug (1) kann daher so angepasst werden, dass es Teil einer Anordnung ist, bei dem die Matrix in kleinere Segmente, etwa 2x2 oder 3x3 usw. unterteilt wird (Fig. 8). Dies erhöht die Nutzbarkeit, Flexibilität und wirtschaftliche sowie Ressourcen-Effizienz erheblich. Das Werkzeug (1) selbst kann zudem noch an der horizontalen Achse der Matrize (12) gespiegelt werden. Für diese Adaption kann ein Zusatz (2a) zum Stempel (2) genutzt werden, der mehrere Stempel über einen übergeordneten Infusionskanal (9b) miteinander verbindet. In den einzelnen Kammern entstehen neue Hohlräume (13d), in denen Werkstücke geformt werden können. Die Drainage des abgeschiedenen Fluids beim Trockenvorgang ist miteinander über horizontale Kanäle (11c) verbunden.

Diese Anpassung / Variante kann mit jeder der vorgenannten Varianten kombiniert werden, wobei die Belegung in jeder Matrix identisch, oder aber auch variiert werden kann, um die Auslastung und Variabilität weiter zu erhöhen. Dies ist beispielhaft in Fig. 9 gezeigt.

Es wurde somit eine technologische Lösung gefunden, die sowohl die Infusion als auch die Trocknung der infiltrierten CMCs in einer geschlossenen Form ermöglicht. Die Infusion und Trocknung laufen dabei in einem kontinuierlichen Prozess ohne manuelle Zwischenschritte ab. Am Ende des Prozesses kann ein fertig geformter und getrockneter Grünkörper ausgeformt werden. Das erfindungsgemäße Verfahren kann somit als ein Verfahren zur automatisierten Herstellung keramischer Faserkomposite angesehen werden.

Die Infusion kann über Vakuum, Druck oder eine Kombination aus beiden erfolgen. Durch den zusätzlich auf den Schlicker aufgebrachten Druck kann ein besseres Infusionsergebnis erreicht und etwaige Lufteinschlüsse im Vergleich zu im Stand der Technik bekannten Verfahren minimiert werden.

Weiterhin können die Herstellungszeit und Arbeitsaufwand deutlich verringert werden. Die vorbereitete Infusionsform muss lediglich mit Fasern und etwaigen Hilfsmitteln wie Abreißgewebe bestückt werden

Die Verwendung einer festen Form und die automatisierbare Herstellung versprechen eine gleichbleibende Qualität und eine hohe Reproduzierbarkeit der erhaltenen Faserkomposite. Dies ist besonders für die Produktion größerer Stückzahlen des gleichen Produkts von großem Interesse. Die Oberflächengüte und Maßhaltigkeit sind so gut, dass je nach Anwendung keine oder nur sehr geringe Nachbearbeitung des Werkstücks erfolgen muss, was Wirtschaftlichkeit und Ressourceneffizienz erhöhen.

Die Materialdicke bzw. die Komprimierung der Faserlagen (Faservolumengehalt) kann nach Wunsch über den Spalt zwischen Unterform und Oberform, also der Größe des Hohlraums (13) eingestellt werden.

Das Verfahren ist flexibel und vielseitig für verschiedenste Faserarchitekturen und Faser-preformen wie z.B. 2D- oder 3D-Gewebe, Geflechte oder auch Kurzfaserfilze anwendbar.

## Patentansprüche

1. Werkzeug (1) zur Herstellung von Bauteilen aus keramischen Faserverbundwerkstoffen durch Infusion von Fasern (4) mit einem Schlicker (7) in einem Hohlraum (13), wobei der Schlicker Wasser und/oder Lösungsmittel sowie Partikel oder Präkursoren hierfür enthält,
wobei das Werkzeug (1) eine Matrize (12) umfasst, wodurch sich im Inneren des Werkzeugs ein Hohlraum (13) befindet, der von der Matrize (12), der Oberseite und der Unterseite des Werkzeugs (1) begrenzt wird,
**dadurch gekennzeichnet, dass**
das Werkzeug (1) zumindest eine Einrichtung (8, 8a) zur Erhöhung des Drucks im Inneren des Hohlraumes (13) und/oder zur Zufuhr des Schlickers in den Hohlraum (13) aufweist,
im Inneren der Matrize (12) zumindest eine Vorrichtung (5, 6) zur Rückhaltung der Partikel oder Präkursoren des Schlickers (7) im Inneren des Hohlraumes (13) und zur Abführung des enthaltenen Wassers und/oder des Lösungsmittels vorhanden ist, und
die Matrize (12) zumindest eine Einrichtung (11, 11a) aufweist, über welche der Druck im Inneren des Hohlraumes (13) erniedrigt werden und/oder überschüssiges Wasser und/oder Lösungsmittel entfernt werden können,
wobei die zumindest eine Vorrichtung (5, 6) derart in der Matrize (12) angeordnet ist, dass Wasser und/oder Lösungsmittel über die zumindest eine Einrichtung (11, 11a) entfernt werden können,
wobei die Matrize (12) aus einem festen Material ausgebildet ist, welches sich bei der Anwendung nicht verformt, und
wobei das Werkzeug (1) vorzugsweise weiterhin zumindest eine Heizvorrichtung aufweist, welche die Erwärmung des Hohlraums (13) ermöglicht;
wobei das Werkzeug (1) weiterhin einen Stempel (2) aufweist, wobei der Stempel (2) formschlüssig an der Innenwand der Matrize (12) anliegt und im Inneren der Matrize (12) vertikal in seiner Position verschiebbar ist, wodurch sich ein Hohlraum (13) zwischen Stempel (2) und Matrize (12) ausbildet, und **dadurch gekennzeichnet, dass** an der Unterseite des Stempels (2) ein Element (14) angeordnet ist, wodurch eine weitere Kavität (13a) zwischen der Unterseite des Stempels und dem Element (14) entsteht, so dass Schlicker (7) durch einen Infusionskanal (9) in die Kavität (13a) fließt und von dort homogen in dem Hohlraum (13) verteilt wird, wobei das Element (14) perforiert ist, so dass Schlicker (7) aus der weiteren Kavität (13a) in den Hohlraum (13) fließen kann.

2. Werkzeug (1) nach Anspruch 1, **dadurch gekennzeichnet, dass** es weiterhin eine Kavität (10) aufweist, die in Raumrichtung unterhalb der zumindest einen Vorrichtung (5, 6) angeordnet ist, wobei in der Kavität (10) Wasser/Lösungsmittel des Schlickers gesammelt und über die zumindest eine Einrichtung (11, 11a) aus der Kavität entfernt werden kann.

3. Werkzeug (1) nach zumindest einem der Ansprüche 1 oder 2, **dadurch gekennzeichnet, dass** im Inneren des Hohlraums (13) Elemente (16, 16a) vorhanden sind, die die Geometrie des Hohlraums (13) definieren.

4. Werkzeug (1) nach zumindest einem der Ansprüche 1 bis 3, **dadurch gekennzeichnet, dass** die Einrichtung (8, 8a) zur Erhöhung des Drucks im Inneren des Hohlraumes (13) und/oder zur Zufuhr des Schlickers (7) in den Hohlraum (13) an der Oberseite des Stempels (2) angeordnet ist und über einen Infusionskanal (9) im Stempel (2) mit dem Hohlraum (13) verbunden ist.

5. Werkzeug (1) nach zumindest einem der Ansprüche 1 bis 4, **dadurch gekennzeichnet, dass** die Einrichtung (8, 8a) zur Erhöhung des Drucks im Inneren des Hohlraumes (13) und/oder zur Zufuhr des Schlickers (7) in den Hohlraum (13) im Bereich der Matrize (12) vorhanden ist und sich überhalb der zumindest einen Vorrichtung (5, 6) zur Rückhaltung der Partikel des Schlickers (7) im Inneren des Hohlraumes (13) und zur Abführung des enthaltenen Wassers und/oder des Lösungsmittels befindet.

6. Werkzeug (1) nach zumindest einem der Ansprüche 1 bis 5, **dadurch gekennzeichnet, dass** die Einrichtung (8, 8a) zur Erhöhung des Drucks im Inneren des Hohlraumes (13) und/oder zur Zufuhr des Schlickers in den Hohlraum (13) im Inneren des Hohlraums (13) angeordnet ist, wobei die Einrichtung (8, 8a) von einem Element (17a) umgeben ist, über welche der Schlicker (7) in den Hohlraum (13) eingebracht wird.

7. Anordnung zur Herstellung von Bauteilen aus keramischen Faserverbundwerkstoffen durch Infusion von Fasern (4) mit einem Partikel oder Präkursoren hiervon und Wasser und/oder Lösungsmittel enthaltenden Schlicker (7), **dadurch gekennzeichnet, dass** sie zwei, drei oder mehr Werkzeuge (1) nach zumindest einem der Ansprüche 1 bis 6 aufweist.

8. Verfahren zur Herstellung von Bauteilen aus keramischen Faserverbundwerkstoffen durch Infusion von Fasern (4) mit einem Wasser und/oder Lösungsmittel enthaltenden Schlicker (7),
**dadurch gekennzeichnet, dass** man
(a) die Fasern (4) in den Hohlraum (13) eines Werkzeugs (1) gemäß einem oder mehrerer der Ansprüche 1 bis 6 oder einer Anordnung gemäß Anspruch 7 einbringt,
(b) das Werkzeug (1) schließt,
(c) den Druck im Inneren des Werkzeugs (1) gegenüber dem Umgebungsdruck absenkt,
(d) gegebenenfalls die Fasern (4) im Inneren des Werkzeugs thermisch behandelt,
(e) einen ersten Wasser und/oder Lösungsmittel enthaltende Schlicker (7) in den Hohlraum (13) einbringt, wobei der Schlicker (7) einen gegenüber Umgebungsdruck erhöhten Druck aufweist,
(f) den Druck im Inneren des Werkzeugs absenkt und gegebenenfalls das Werkzeug thermisch aufheizt und Wasser und/oder Lösungsmittel aus dem Hohlraum (13) entfernt,
(g) gegebenenfalls die Schritte (e) und (f) einmal oder mehrmals wiederholt, wobei ein Schlicker verwendet wird, der der gleiche oder ein anderer Schlicker ist wie der erste Schlicker (7), und
(h) anschließende den erhaltenen Grünkörper aus dem Werkzeug ausformt und in einem Ofen sintert.

9. Verfahren nach Anspruch 8, **dadurch gekennzeichnet, dass** der Unterdruck in Schritt (c) auf einen Druck unterhalb Umgebungsdruck abgesenkt wird, insbesondere auf 800 mbar oder weniger, vorzugsweise auf 500 mbar oder weniger, insbesondere auf 250 mbar oder weniger, besonders bevorzugt 100 mbar oder weniger, insbesondere bevorzugt 80 mbar bis 10 mbar, bevorzugt von 60 mbar bis 20 mbar.

10. Verfahren nach Anspruch 8 oder 9, **dadurch gekennzeichnet, dass** der Druck in Schritt (e) 100 bar oder weniger, insbesondere von 1 bar bis 50 bar, bevorzugt von 2 bar bis 30 bar, besonders bevorzugt von 3 bar bis 20 bar beträgt.

## Claims

1. A mold (1) for producing components made of ceramic fiber composites by soaking fibers (4) with a slip (7) in a cavity (13), in which said slip contains water and/or solvent, as well as particles or precursors thereof,
wherein said mold (1) includes a die (12), whereby a cavity (13) formed by the die (12), the upper side and the lower side of the mold (1) is present in the interior of the mold,
**characterized in that**
said mold (1) has at least one device (8, 8a) for increasing the pressure in the interior of the cavity (13) and/or for supplying the slip into the cavity (13),
at least one device (5, 6) for retaining the particles or precursors of the slip (7) in the interior of the cavity (13) and for discharging the water contained therein and/or the solvent present in the interior of the die (12), and
said die (12) has at least one device (11, 11a) by which the pressure in the interior of the cavity (13) can be reduced and/or excess water and/or solvent can be removed,
wherein said at least one device (5, 6) is arranged within the die (12) in such a way that water and/or solvents can be removed through said at least one means (11, 11a),
wherein said die (12) is formed from a solid material that does not deform during the application, and
wherein said mold (1) preferably further has at least one heating device, which enables the cavity (13) to be heated,
wherein said mold (1) further has a punch (2), wherein said punch (2) is placed close to the interior wall of the die (12) in a form-fitting manner and can be displaced vertically in the interior of the die (12), whereby a cavity (13) is formed between the punch (2) and the die (12), and **characterized in that** an element (14) is provided at the lower side of the punch (2), whereby another cavity (13a) is formed between the lower side of the punch and the element (14), so that slip (7) flows through an infusion canal into the cavity (13a), from where it is homogeneously distributed in the cavity (13), wherein said element (14) is perforated, so that slip (7) can flow from said other cavity (13a) into said cavity (13).

2. The mold according to claim 1, **characterized in that** it further has a cavity (10) that is arranged in a spatial direction below said at least one device (5, 6), wherein water/solvent of the slip can be collected in the cavity (10) and removed from the cavity through said at least one device (11, 11a).

3. The mold (1) according to at least one of claims 1 or 2, **characterized in that** elements (16, 16a) defining the geometry of the cavity (13) are present in the interior of the cavity (13).

4. The mold (1) according to at least one of claims 1 to 3, **characterized in that** said devices (8, 8a) for increasing the pressure in the interior of the cavity (13) and/or for supplying the slip (7) into the cavity (13) are provided at the upper side of the punch (2), and communicate with the cavity (13) through an infusion canal (9) in the punch (2).

5. The mold (1) according to at least one of claims 1 to 4, **characterized in that** said devices (8, 8a) for increasing the pressure in the interior of the cavity (13) and/or for supplying the slip (7) into the cavity (13) are present in the vicinity of the die (12), and are provided above said at least one device (5, 6) for retaining the particles of the slip (7) in the interior of the cavity (13) and for discharging the water contained therein and/or the solvent.

6. The mold (1) according to at least one of claims 1 to 5, **characterized in that** said devices (8, 8a) for increasing the pressure in the interior of the cavity (13) and/or for supplying the slip into the cavity (13) are provided in the interior of the cavity (13), wherein said devices (8, 8a) are surrounded by an element (17a), through which the slip (7) is introduced into the cavity (13).

7. An assembly for producing components from ceramic fiber composites by soaking fibers (4) with a slip (7) containing particles or precursors thereof and water and/or solvents,
**characterized in that** it has two, three or more molds (1) according to at least one of claims 1 to 6.

8. A process for producing components from ceramic fiber composites by soaking fibers (4) with a slip (7) containing water and/or solvents, **characterized in that**
(a) said fibers (4) are introduced into the cavity (13) of a mold (1) according to one or more of claims 1 to 6 or of an assembly according to claim 7,
(b) the mold (1) is closed,
(c) the pressure inside the mold (1) is reduced as compared to the ambient pressure,
(d) optionally the fibers (4) within the mold are treated thermally,
(e) a first slip containing water and/or solvents is introduced into the cavity (13), wherein said slip (7) has a pressure that is increased over the ambient pressure,
(f) the pressure within the mold is reduced, and optionally the mold is heated thermally, and water and/or solvents are removed from the cavity (13),
(g) optionally steps (e) and (f) are repeated once or several times, wherein a slip is used that is the same as or different from the first slip (7), and
(h) subsequently, the green body obtained is demolded and sintered in an oven.

9. The process according to claim 8, **characterized in that**, the reduced pressure is lowered to a pressure below the ambient pressure in step (c), especially to 800 mbar or less, preferably to 500 mbar or less, specifically to 250 mbar or less, more preferably to 100 mbar or less, especially preferably to from 80 mbar to 10 mbar, most preferably from 60 mbar to 20 mbar.

10. The process according to claim 8 or 9, **characterized in that** the pressure in step (e) is 100 bar or less, especially from 1 bar to 50 bar, preferably from 2 bar to 30 bar, more preferably from 3 bar to 20 bar.

## Revendications

1. Moule (1) pour préparer des composants à partir de composites en fibres céramiques par imprégnation de fibres (4) avec une bouillie (7) dans une cavité (13),dans lequel ladite bouillie contient de l'eau et/ou des solvants ainsi que des particules ou des précurseurs de celles-ci,
dans lequel ledit moule (1) comprend une matrice (12), de telle manière qu'une cavité (13) se trouve dans l'intérieur du moule, délimitée par la matrice (12), les surfaces supérieure et inférieure du moule (1),
**caractérisé en ce que**
ledit moule (1) présente au moins un moyen (8, 8a) pour augmenter la pression dans l'intérieur de la cavité (13) et/ou pour alimenter la bouillie dans la cavité (13),
au moins un dispositif (5, 6) pour retenir les particules ou précurseurs de la bouillie (7) dans l'intérieur de la cavité (13) et pour décharger l'eau contenue et/ou le solvant est présent dans l'intérieur de la matrice (12), et
la matrice (12) présente au moins un moyen (11, 11a), par lequel la pression dans l'intérieur de la cavité (13) peut être réduite et/ou l'excès d'eau et/ou les solvants peuvent être éliminés,
dans lequel ledit au moins un dispositif (5, 6) est arrangé dans la matrice (12) de telle manière que l'eau et/ou les solvants puissent être éliminés par ledit au moins un moyen (11, 11a),
dans lequel la matrice (12) est formée d'un matériau solide qui n'est pas déformé pendant l'application, et
dans lequel le moule (1) présente de préférence en outre au moins un dispositif de chauffage qui permet à la cavité (13) d'être chauffée,
dans lequel le moule (1) présente en outre un poinçon (2), dans lequel ledit poinçon (2) s'appuie sur la parois intérieure de la matrice (12) par complémentarité de formes et peut être déplacé verticalement dans l'intérieur de la matrice (12), de manière qu'une cavité (13) soit formée entre le poinçon (2) et la matrice (12), et **caractérisé en ce qu'**un élément (14) est situé sur la surface inférieure du poinçon (2), de manière qu'une autre cavité (13a) soit formée entre la surface inférieure du poinçon (2) et ledit élément (14), de manière que de la bouillie (7) s'écoule à travers un conduit d'infusion (9) dans la cavité (13a), d'où elle est répartie de manière homogène dans la cavité (13), dans lequel ledit élément (14) est perforé, de manière que de la bouillie (7) puisse s'écouler à partir de ladite autre cavité (13a) dans la cavité (13).

2. Moule (1) selon la revendication 1, **caractérisé en ce qu'**il présente en outre une cavité (10) qui est située au-dessous ledit au moins un dispositif (5, 6) dans une direction spatiale, dans lequel l'eau/le solvant de la bouillie peut être collecté dans la cavité (10) et éliminé de la cavité á travers ledit au moins un moyen (11, 11a).

3. Moule (1) selon au moins l'une des revendications 1 ou 2, **caractérisé en ce que** des éléments (16, 16a) qui définissent la géométrie de la cavité (13) sont présents dans l'intérieur de la cavité (13).

4. Moule (1) selon au moins l'une des revendications 1 à 3, **caractérisé en ce que** ledit moyen (8, 8a) pour augmenter la pression dans l'intérieur de la cavité (13) et/ou pour alimenter la bouillie (7) dans la cavité (13) est situé sur la partie supérieure du poinçon (2) et relié à la cavité (13) à travers un conduit d'infusion (9) dans le poinçon (2).

5. Moule (1) selon au moins l'une des revendications 1 à 4, **caractérisé en ce que** ledit moyen (8, 8a) pour augmenter la pression dans l'intérieur de la cavité (13) et/ou pour alimenter la bouillie (7) dans la cavité (13) est présent dans la zone de la matrice (12), et se trouve au-dessus dudit au moins un dispositif (5, 6) pour retenir les particules ou précurseurs de la bouillie (7) dans l'intérieur de la cavité (13) et pour décharger l'eau contenue et/ou le solvant.

6. Moule (1) selon au moins l'une des revendications 1 à 5, **caractérisé en ce que** ledit moyen (8, 8a) pour augmenter la pression dans l'intérieur de la cavité (13) et/ou pour alimenter la bouillie dans la cavité (13) est situé dans l'intérieur de la cavité (13), dans lequel ledit moyen (8, 8a) est entouré d'un élément (17a) à travers lequel la bouillie (7) est introduite dans la cavité (13).

7. Assemblage pour la préparation de composants à partir de composites en fibres céramiques par imprégnation de fibres (4) avec une bouillie (7) contenant des particules ou des précurseurs de celles-ci et de l'eau et/ou des solvants,
**caractérisé en ce qu'**il présente deux, trois ou plusieurs moules (1) selon au moins l'une des revendications 1 à 6.

8. Procédé pour la préparation de composants à partir de composites en fibres céramiques par imprégnation de fibres (4) avec une bouillie (7) contenant de l'eau et/ou des solvants,
**caractérisé en ce que**
(a) les fibres (4) sont introduites dans la cavité (13) d'un moule (1) selon l'une ou plusieurs des revendications 1 à 6 ou d'un assemblage selon la revendication 7,
(b) le moule (1) est fermé,
(c) la pression dans l'intérieur du moule (1) est réduite par rapport à la pression ambiante,
(d) éventuellement les fibres (4) sont traitées thermiquement dans l'intérieur du moule,
(e) une première bouillie (7) contenant de l'eau et/ou des solvants est introduite dans la cavité (13), dans lequel ladite bouillie (7) présente une pression augmentée par rapport à la pression ambiante,
(f) la pression dans l'intérieur du moule est réduite, et éventuellement le moule est chauffé thermiquement, et l'eau et/ou le solvant est éliminé de la cavité (13),
(g) éventuellement les étapes (e) et (f) sont répétées une fois ou plusieurs fois, dans lequel une bouillie est utilisée qui est la même ou une autre bouillie que la première bouillie (7), et
(h) ensuite le corps vert obtenu est démoulé et fritté dans un fourneau.

9. Procédé selon la revendication 8, **caractérisé en ce que** la dépression dans l'étape (c) est réduite à une pression inférieure à la pression ambiante, notamment à 800 mbar ou moins, de préférence à 500 mbar ou moins, notamment à 250 mbar ou moins, de préférence encore à 100 mbar ou moins, de préférence spécifique à 80 mbar à 10 mbar, de préférence à 60 mbar à 20 mbar.

10. Procédé selon la revendication 8 ou 9, **caractérisé en ce que** la pression dans l'étape (a) est 100 bar ou moins, notamment de 1 bar à 50 bar, de préférence de 2 bar à 30 bar, de préférence encore de 3 bar à 20 bar.
